# EUROPÄISCHE PATENTSCHRIFT

(11) **EP 2 923 100 B1**
(45) Veröffentlichungstag und Bekanntmachung des Hinweises auf die Patenterteilung: **14.12.2016**
(21) Anmeldenummer: 13814018.1
(22) Anmeldetag: 30.10.2013
(51) Int. Cl.: F16D 23/14, F16D 25/08

(54) **NEHMERZYLINDER**
SLAVE CYLINDER
CYLINDRE RÉCEPTEUR

(30) Priorität: 22.11.2012 DE 102012221300
(43) Veröffentlichungstag der Anmeldung: 30.09.2015
(73) Patentinhaber: Schaeffler Technologies AG & Co. KG, 91074 Herzogenaurach (DE)
(72) Erfinder: GRABENSTÄTTER, Jan, 76593 Gernsbach (DE)
(86) Internationale Anmeldenummer: PCT/DE2013/200264
(87) Internationale Veröffentlichungsnummer: WO 2014/079433

(56) Entgegenhaltungen:
- EP-A1- 1 726 841
- WO-A1-2010/149129
- DE-A1- 4 338 262
- DE-A1- 10 330 165

## Beschreibung

Die Erfindung betrifft einen Nehmerzylinder eines Ausrücksystems für Kupplungs- oder Bremssysteme eines Kraftfahrzeuges nach dem Oberbegriff des ersten Patentanspruchs.

Die Schrift EP 1 726 841 A1 offenbart einen solchen Nehmerzylinder.

Gattungsgemäße konzentrische Nehmerzylinder ("concentric slave cylinder" - CSC) oder Zentralausrücker werden bei hydraulischen Kupplungssystemen in der Funktionskette zwischen Kupplungspedal und Kupplung eingesetzt. Sie weisen ein als Ringzylinder ausgebildetes Gehäuse auf, das um eine Kupplungs- bzw. Getriebeeingangswelle angeordnet ist. In dem Gehäuse ist ein in axialer Richtung beweglicher Ringkolben geführt, der ein sich an einer Kupplung abstützendes Ausrücklager trägt. Ein beispielsweise als Schraubendruckfeder ausgebildeter Energiespeicher umschließt den Kolben. Bei hydraulischer Beaufschlagung des Kolbens über eine Druckleitung wirkt der vorgespannte Energiespeicher auf das Ausrücklager, wodurch die Kupplung betätigt wird.

Aus der Druckschrift DE 11 2005 000 619 T5 ist beispielsweise ein derartiger Nehmerzylinder bekannt, der einen Kunststoffkörper umfasst, der eine ringförmige Bohrung definiert, in welcher ein ringförmiger Kolben gleitend gelagert ist. Der Kolben ist zur Bohrung hin durch eine ringförmige Dichtung abgedichtet. Zwischen der Dichtung und dem geschlossenen Ende der Bohrung ist ein Druckraum definiert, in den ein Druckmedium eingeleitet wird. Das Druckmedium kommt von einem Geberzylinder, der durch ein Kupplungspedal betätigbar ist. Der Kolben des Nehmerzylinders wirkt auf ein Ausrücklager, durch welches wiederum die Kupplung betätigt wird. In seiner vollständig nach außen gedrückten Stellung berührt der Kolben einen am Gehäuse angeordneten Sicherungsring, der den Kolbenhub begrenzt. Der Sicherungsring, der auch als Transportsicherung eingesetzt wird, weist einen kreisförmigen Querschnitt auf und sitzt in einer Nut im Außenumfang des sich radial innen befindenden Wandbereiches des Kolbens, der den Druckraum nach innen begrenzt. Die Transportsicherung soll verhindern, dass in nicht montiertem Zustand die Vorlastfeder des CSC die Dichtung aus dem Gehäuse schiebt. Der Anschlag ist allerdings nicht in der Lage während des Betriebs den Kolbenweg zu begrenzen.

Wird aufgrund von Missbrauch der Kupplung diese durch zu starke Beanspruchung überhitzt, wandern aufgrund die Tellerfederzungen der Kupplung unzulässig weit in Richtung Motor.

Wird der Geberzylinder nun in dessen unbetätigte Position gefahren öffnet sich die Verbindung zum Reservoir des Ausrücksystems. Die Vorlastfeder kann nun den Kolben in Richtung Tellerfederzungen nachschieben, wobei sie Fluid aus dem Reservoir in das Ausrücksystem zieht. Bei der anschließenden Betätigung wird das CSC überdrückt, d.h. die dynamische Kolbendichtung wird aus dem Gehäuse geschoben, wobei diese beschädigt wird. Fluid kann nun in die Kupplungsglocke spritzen. Da die Kupplung stark erwärmt ist besteht die Gefahr, dass sich das Fluid entzündet. Ein Anschlag der das zu weite Ausrücken des Kolbens verhindern soll, ist schwierig zu realisieren, relativ große Kräfte wirken und der Anschlag deshalb sehr stark dimensioniert sein muss. Würde das CSC gegen einen festen Anschlag laufen so muss das gesamte Ausrücksystem große Kräfte aufnehmen, wodurch Komponenten des Ausrücksystems beschädigt werden können.

Die Aufgabe der Erfindung besteht darin, einen Nehmerzylinder zu entwickeln, der den Kolbenhub auch bei Überhitzung und übermäßigem Wandern der Tellerfederzungen vom Nehmerzylinder weg begrenzt und verhindert, dass die Kolbendichtung aus dem Gehäuse rückt.

Diese Aufgabe wird durch die kennzeichnenden Merkmale des ersten Patentanspruchs gelöst.

Vorteilhafte Ausgestaltungen ergeben sich aus den Unteransprüchen.

Der Nehmerzylinder weist ein konzentrisch um eine Getriebeeingangswelle angeordnetes Gehäuse mit einem Ringraum auf, in dem ein Kolben mit einer Kolbendichtung axial beweglich aufgenommen und mit einem Druck eines Druckmediums beaufschlagbar ist und mit einem Ausrücklager in Wirkverbindung steht, das auf die Tellerfederzungen einer Kupplung wirkt, wobei auf den Kolben eine Vorlastfeder wirkt und eine Sicherung zur Begrenzung des Kolbenhubes in Richtung zum Ausrücklager vorgesehen ist und wobei in dem Ringraum in Richtung zur Kolbendichtung ein mit dem Druck des Druckmediums beaufschlagbarer Druckraum ausgebildet ist, wobei die Sicherung zur Begrenzung des Kolbenhubes in Ausrückrichtung in Form von mit der Vorlastfeder zusammenwirkenden Mitteln ausgebildet ist, durch welche die Wirkrichtung der Vorlastfeder auf den Kolben umkehrbar ist.

Da die Vorlastfeder dadurch das Ausrücklager nur so lange an den Tellerfederzungen hält, wie diese sich im zulässigen Bereich in Richtung Motor verschoben haben, sorgt die Vorlastfeder oberhalb dieser Bereichs dafür, dass durch deren umgekehrte Wirkrichtung im unbetätigtem Zustand, in dem die Verbindung vom Ausrücksystem zum Reservoir offen ist, das Ausrücklager von der Vorlastfeder entgegen der Ausrückrichtung in den zulässigen Bereich zurückgezogen wird. Bei der anschließenden Betätigung der Kupplung kann somit das der Nehmerzylinder nicht überdrückt werden.

Die mit der Vorlastfeder zu deren Umkehren der Wirkrichtung eingesetzten Mittel sind bevorzugt in Form von miteinander wirkverbundenen axial zueinander und zum Gehäuse verschiebbaren Hülsen ausgebildet, die einerseits mit dem Gehäuse und andererseits mit dem Ausrücklager gekoppelt sind und auf welche die Vorlastfeder wirkt derart,
- dass in einer nicht ausgerückten Position des Kolbens bis zu einem ersten Ausrückweg sich die Vorlastfeder mit ihrem dem Ausrücklager entgegen gerichteten ersten Ende am Gehäuse abstützt und mit ihrem ausrücklagerseitigen zweiten Ende über die Hülsen auf das Ausrücklager in Richtung zur Kupplung (Ausrückrichtung) wirkt und
- dass ab zurücklegen des ersten Ausrückweges bis zu einem maximalen Ausrückweg sich die Vorlastfeder mit ihrem ausrücklagerseitigen zweiten Ende am Gehäuse abstützt und mit ihrem ersten Ende über die Hülsen auf das Ausrücklager entgegengesetzt zur Kupplung (Einrückrichtung) wirkt.

Dabei ist auf dem Außendurchmesser des Gehäuses eine innere erste Hülse axial verschiebbar angeordnet. Diese liegt in eingerückter Position des Kolbens mit einem ersten Ende, welches vom Ausrücklager abgewandt ist, an einem Bund des Gehäuses an. Das Gehäuse weist einen ersten Anschlag auf, gegen den die Hülse bei Erreichen des ersten Ausrückweges anschlägt. Die Ausrückfeder wirkt dabei mit ihrem zweiten Ende an einem in Richtung zum Ausrücklager weisenden zweiten Ende der ersten Hülse.

Weiterhin ist eine mittlere zweite Hülse vorhanden, die die erste Hülse umringt und an deren vom Ausrücklager abgewendeten ersten Ende das erste Ende der Vorlastfeder anliegt und deren zweites Ende in Richtung zum Ausrücklager weist,

Weiterhin ist eine, die zweite Hülse umringende, äußere dritte Hülse vorhanden, die axial verschiebbar auf der zweiten Hülse sitzt und an ihrem dem Ausrücklager entgegen weisenden ersten Ende auszugsicher mit der zweiten Hülse gekoppelt ist und mit ihrem in Richtung zum Ausrücklager weisenden zweiten Ende mit dem Ausrücklager verbunden ist.

Vorteilhafter Weise sind die Hülsen zum Gehäuse und zueinander verdrehsicher angeordnet.

Dabei ist die erste Hülse auf dem Gehäuse beispielsweise verdrehgesichert dadurch, dass die erste Hülse mit radial nach innen weisenden Vorsprüngen in Nuten des Gehäuses eingreift, wobei die radial nach innen weisenden Vorsprünge bei Ereichen der ersten Auszugslänge am Anschlag des Gehäuses anliegen und der Anschlag des Gehäuses durch das ausrücklagerseitige Ende der Nuten gebildet wird.

Die erste Hülse weist an ihrem zweiten Ende einen radial nach außen weisenden Bund auf, an dem das zweite Ende der Vorlastfeder anliegt.

Die zweite Hülse ist an ihrem ersten Ende mit einem radial nach innen weisenden Bund versehen, an dem das erste Ende der Vorlastfeder anliegt. Weiterhin weist die zweite Hülse sich axial erstreckende Schlitze auf, die nicht bis an das zweite Ende der zweiten Hülse reichen.

Die dritte Hülse ist an ihrem ersten Ende mit radial nach innen weisende Vorsprüngen versehen. die in die Schlitze der zweiten Hülse eingreifen. Dabei bilden die in Richtung zum Ausrücklager weisenden Enden der Schlitze in Verbindung mit den radial nach innen weisenden Vorsprüngen einen Anschlag. Die dritte Hülse an ihrem zweiten Ende einen sich radial nach innen erstreckenden Bund und einen sich anschließenden axialen Bereich aufweist, der mit dem Ausrücklager 7 drehfest verbunden ist. Durch die in die Schlitze der zweiten Hülse eingreifenden Vorsprünge der dritten Hülse ist die dritte Hülse drehfest und axial verschiebbar mit der zweite Hülse wirkverbunden.

In der eingerückten Endposition sind alle drei Hülsen ineinander geschoben, wobei die zweite Hülse mit ihrem ersten Ende an einem Bund des Gehäuses anliegt und sich die Vorlastfeder darüber am Gehäuse abstützt und das zweite Ende der dritten Hülse am zweiten Ende der ersten Hülse anliegt und die Vorlastfeder mit ihrem zweiten Ende auf das zweite Ende der ersten Hülse damit auf das Ausrücklager in Ausrückrichtung wirkt.

Bis zum Erreichen des ersten Ausrückweges des Kolbens ist das erste Ende der zweiten Hülse mit dem ersten Ende der Vorlastfeder am Gehäuse festgelegt und die erste Hülse wird mit dem Ausrücklager und der dritten Hülse in Ausrückrichtung axial auf dem Gehäuse verschoben, bis die erste Hülse mit dem radial nach innen weisenden Vorsprüngen am Anschlag des Gehäuses anliegt. In dieser Position wirkt das zweite Ende der Vorlastfeder noch in Ausrückrichtung auf das zweite Ende der ersten Hülse und damit auf das zweite Ende der dritten Hülse und das Ausrücklager.

Nach dem zurücklegen des ersten Ausrückweges bis zum Erreichen der maximalen Auszuglänge des Kolbens wird das Ausrücklager mit der dritten Hülse in Ausrückrichtung bewegt, wobei sich die zweite Hülse mit in Ausrückrichtung bewegt und sich der Bund am zweiten Ende der zweiten Hülse entgegen der Federkraft der Ausrückfeder in Ausrückrichtung bewegt und das zweite Ende der Vorlastfeder am radial nach außen weisenden Bund der ersten Hülse anliegt und über diese am Gehäuse festgelegt ist, so dass die Federkraft über die zweite Hülse, die dritte Hülse und das Ausrücklager entgegen der Ausrückrichtung des Kolbens auf den Kolben wirken.

Vorteilhafter Weise ist die radial außen angeordnete dritte Hülse als Schutz gegen Schmutz umfangsseitig geschlossen ausgeführt.

Zusammengefasst befinden sich am Gehäuse in axialer Richtung verlaufende Nuten. Die innere erste Hülse läuft mittels der radial nach innen weisenden Vorsprünge (Nasen) verdrehgesichert und geführt in diesen Nuten. Der Weg der ersten Hülse ist durch die Länge der Nuten begrenzt. Auf die innere Hülse wirkt die Vorlastfeder, welche in Drehrichtung des Ausrücklagers zu der inneren Hülse verdrehgesichert ist. Hierbei stützt sich die Vorlastfeder an der mittleren zweiten Hülse ab.

Die Vorlastfeder ist hier ebenfalls in Drehrichtung des Ausrücklagers zur mittleren zweiten Hülse verdrehgesichert. In der mittleren zweiten Hülse befinden sich axial erstreckende Schlitze, in welchen die äußere dritte Hülse verdrehgesichert geführt wird. Der Weg der äußeren dritten Hülse ist durch das Ende der Schlitze begrenzt. Die äußere Hülse ist fest mit dem Ausrücklager verbunden. Wird die äußere Hülse geschlossen ausgeführt ist sie gleichzeitig ein Schutz gegen Schmutz aus dem Bereich der Getriebeglocke. Dies stellt eine Alternative zu einem Faltenbalg dar.

Die Funktionsweise bei übermäßigem Wandern der Tellerfederzungen in Richtung Getriebe ist folgende:
Nachdem die Tellerfederzungen unzulässig weit in Richtung Motor gewandert sind kuppelt der Fahrer ein. Die Vorlastfeder wirkt dabei entgegen der Ausrückbewegung des Ausrücklagers und hilft somit dabei, das Ausrücklager von den Tellerfederzungen weg zu ziehen. Bei der anschließenden Betätigung durch den Fahrer kann das CSC nicht überdrückt werden, Vom Fahrer kann nun beliebig oft aus- und eingekuppelt werden, da die Vorlastfeder das Ausrücklager und den Kolben immer wieder zurückzieht.

Auf einen Anschlagring als Transportsicherung gegen rausdrücken des Kolbens aus dem Gehäuse durch die Vorlastfeder kann verzichtet werden, da die Vorlastfeder im Bereich der maximalen Hubposition das Ausrücklager am ausrücken hindert.

Mit der erfindungsgemäßen Lösung wird somit erstmalig eine Lösung zur Verfügung gestellt, bei der die Vorlastfeder über entsprechende Mittel derartig mit dem Ausrücklager wirkverbunden ist, dass, mittels der Mittel über den Betätigungsbereich eine Umkehr der Wirkungsrichtung der Vorlastfeder erreicht wird, so dass bei maximalem Ausrückweg die Feder der Ausrückkraft entgegen wirkt Bei Überhitzung der Kupplung wird dadurch ein zu weites Ausrücken des Kolbens und damit verbundene Beschädigungen des Nehmerzylinders vermieden.

Die Erfindung wird nachfolgend anhand von Ausführungsbeispielen und zugehörigen Zeichnungen näher erläutert. Es zeigen:
- Figur 1: den Nehmerzylinder im Längsschnitt in einer minimalen Hubposition (in eingerückter Position),
- Figur 2: den Nehmerzylinder im Längsschnitt in einer Hubposition, bevor die Wirkrichtung der Vorlastfeder umgekehrt wird,
- Figur 3: den Nehmerzylinder im Längsschnitt in einer maximalen Hubposition,
- Figur 4: Das Diagramm des Ausrückweges über der Federkraft der Vorlastfeder.

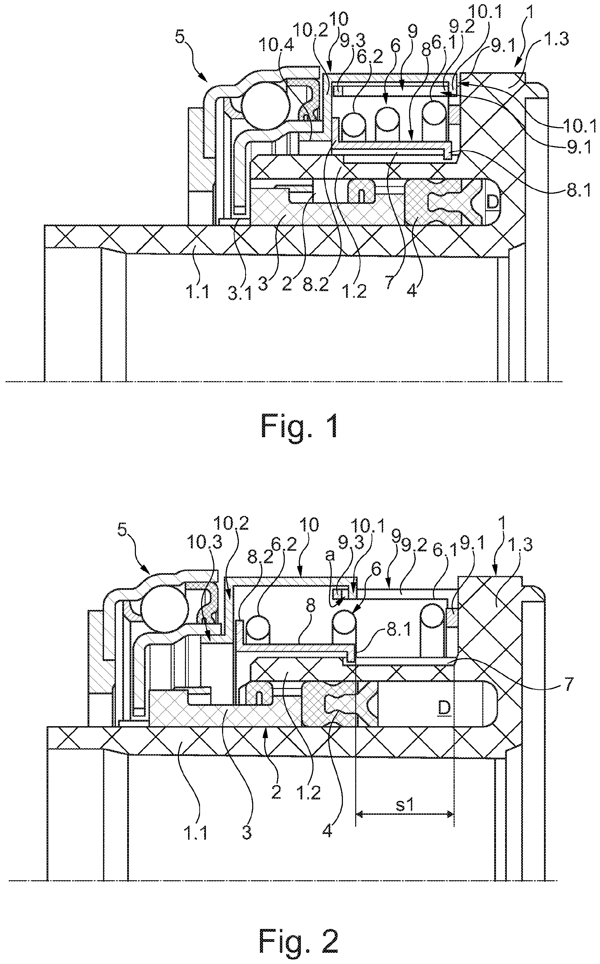

Der Nehmerzylinder weist gemäß Figur 1 bis 3 ein aus Kunststoff bestehendes Gehäuse 1 mit einem radial innen liegenden ersten Wandbereich 1.1 auf, der eine Führungshülse bildet. Das Gehäuse 1 besitzt einen radial nach außen von dem ersten Wandbereich 1.1 beabstanden zweiten Wandbereich 1.2, wodurch zwischen dem ersten Wandbereich 1.1 und dem zweiten Wandbereich 1.2 ein Ringraum 2 ausgebildet ist, in dem ein axial beweglicher Kolben 3 mit einer Kolbendichtung 4 angeordnet ist. In den Ringraum 2 mündet eine nicht dargestellte Druckmittelbohrung, so dass zwischen dem ersten Wandbereich 1.1, dem zweitem Wandbereich 1.2 und der Kolbendichtung 4 ein Druckraum D gebildet wird. Bekannter Weise wirkt der Kolben 3 bei Druckbeaufschlagung des Druckraums D auf ein Ausrücklager 5 und es ist eine Vorlastfeder 6 vorgesehen. Das Ausrücklager 5 drückt gegen nicht dargestellte Zungen einer Tellerfeder der ebenfalls nicht gezeigten Kupplung.

Die Vorlastfeder 6 weist mit einem ersten Ende 6.1 in Richtung zu einem Flansch 1.3 des Gehäuses 1 und mit dem zweiten Ende 6.2 in Richtung zum Ausrücklager 5.

In dem zweiten Wandbereich 1.2 des Gehäuses 1 sind Nuten 7 eingebracht, die sich entlang der Längsachse A des konzentrischen Nehmerzylinders erstrecken.

Auf dem nicht bezeichneten Außendurchmesser des zweiten Wandbereich 1.2 des Gehäuses 1 ist eine erste Hülse 8 axial verschiebbar und verdrehfest gelagert, die an ihrem in Richtung zum Flansch 1.3 weisenden ersten Ende radial nach innen weisende Vorsprünge 8.1 aufweist, welche in die Nuten 7 eingreifen. An dem in Richtung zum Ausrücklager 5 weisenden zweiten Ende ist die erste Hülse 8 mit einem radial nach außen weisenden Bund 8.2 ausgestattet.

Es ist weiterhin eine die radial innen liegende erste Hülse 8 umringende mittlere zweite Hülse 9 vorhanden, an deren vom Ausrücklager 5 abgewendeten ersten Ende ein radial nach innen weisender Bund 9.1 angeordnet ist. Die zweite Hülse 9 besitzt sich axial erstreckende Schlitze 9.2, die nicht bis an das in Richtung zum Ausrücklager weisende zweite Ende 9.3 der zweiten Hülse 9 reichen und dadurch einen Anschlag bilden.

Eine radial außen angeordnete dritte Hülse 10 weist an ihrem von Ausrücklager wegweisenden ersten Ende radial nach innen weisende Vorsprünge 10.1 auf, die in die sich in Richtung zur Längsachse erstreckende Schlitze 9.2 der zweiten Hülse 9 eingreifen. An ihrem zweiten Ende in Richtung zum Ausrücklager 5 weisenden Ende besitzt die dritte Hülse 10 einen sich radial nach innen erstreckenden Bund 10.2 und einen sich anschließenden axialen Bereich 10.3, der mit dem Ausrücklager 7 axial fest und drehfest verbunden ist.

Die Vorlastfeder 6 liegt mit ihrem ersten Ende 6.1 an dem radial nach innen weisenden Bund 9.1 der zweiten Hülse 9 und mit ihrem zweiten Ende 6.2 an dem radial nach außen weisenden Bund 8.1 der ersten Hülse 8.

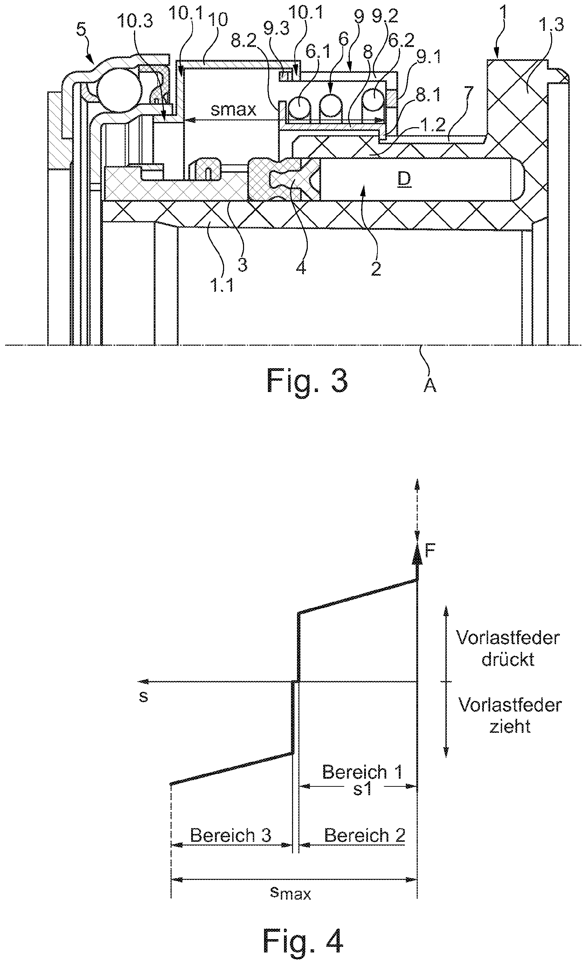

Bei dem in Figur 1 dargestellten Nehmerzylinder in der minimalen Hubposition (in eingerückter Position / erster Bereich - s. Figur 4) drückt die Vorlastfeder 6 das Ausrücklager 5 gegen die nicht dargestellten Tellerfederzungen, denn in dieser eingerückten Position drückt die Vorlastfeder 6 mit ihrem ersten Ende 6.1 die mittlere Hülse 9 gegen den Flansch 1.3 des Gehäuses 1. Somit bleibt die mittlere Hülse 9 am Gehäuse 1 stehen und die Vorlastfeder 6 ist darüber praktisch mit ihrem ersten Ende 6.1 am Gehäuse 1 festgelegt. Sowohl die innere Hülse 8 als auch die äußere Hülse 10 können axial vom Flansch 1.3 weggerichtet verfahren werden. Dabei drückt das zweite Ende 6.1 der Vorlastfeder 6 gegen den radial nach außen weisenden Bund 8.2 der ersten Hülse 8 und damit den Bund 8.2 der ersten Hülse 8 gegen den radial nach innen weisenden Bund der am Ausrücklager 5 befestigten dritten Hülse, wodurch das Ausrücklager gegen die nicht dargestellte Tellerfederzungen gepresst wird.

Wurde gemäß Figur 2 der Kolben 3 und somit das Ausrücklager 5 um einen ersten Ausrückweg s1, der im Wesentlichen der Länge der Nut 7 im zweiten Wandbereich 1.2 des Gehäuses 1 entspricht, in Richtung der nicht dargestellten Kupplung ausgerückt, liegen die radial nach innen weisenden Vorsprünge 8.1 an dem in Richtung zum Ausrücklager weisenden Ende der Nuten 7 an, die somit als Anschlag wirken und eine weitere Bewegung der ersten Hülse 8 in Ausrückrichtung begrenzen. Die mittlere zweite Hülse steht noch immer wie in Figur 1 durch die Vorlastfeder 5 angedrückt am Flansch 1.3 des Gehäuses 1 an. Zwischen den radial nach innen weisenden Vorsprüngen 10.1 die in die Schlitze 9.2 der zweiten Hülse 9 eingreifen und den Enden der Schlitze 9.2 existiert ein Spiel a. Diese die Größe des Spiels a entspricht einem Bereich 2 (s. Figur 4), indem von der Vorlastfeder 6 keine Kraft auf das Ausrücklager 5 wirkt.

Figur 3 zeigt den Nehmerzylinder in seiner maximalen Hubposition (Bereich 3 - siehe Figur 4), bei einem maximalen Ausrückweg smax. Rückt der Kolben 3 und damit das Ausrücklager 2 ab dem Bereich 3 gem. Figur 1 weiter aus, legen sich die radial nach innen weisenden Vorsprünge 10.1 der dritten Hülse 10 an den Enden der Schlitze 9.2 an.

Die innere erste Hülse 8 steht, denn deren radial nach innen weisenden Vorsprünge 8.1 liegen am Ende der Nut 7 an. Das zweite Ende 6.2 der Vorlastfeder 6 ist somit über die erste Hülse 8 am Gehäuse 1 festgelegt.

Die äußere dritte Hülse 10 zieht bei einer weiteren Ausrückbewegung die mittlere zweite Hülse 9 mit. Da an dem radial nach innen weisenden Bund der zweiten Hülse 9 das erste Ende 6.1 der Vorlastfeder 6 anliegt, wird diese komprimiert und wirkt mit einer Rückstellkraft auf das Ausrücklager 5 und somit den Kolben 3, der am Ausrücklager 5 anliegt. Die Länge des Bereiches 3 ist hierbei so ausgelegt, dass sie größer ist als der Kolbenhub beim Betätigen der Kupplung. Die Vorlastfeder 6 zieht somit entgegen der Ausrückbewegung am Ausrücklager 5.

Die Funktionsweise bei übermäßigem Wandern der Tellerfederzungen in Richtung Getriebe ist folgende:
Nachdem die nicht dargestellten Tellerfederzungen unzulässig weit in Richtung Motor gewandert sind kuppelt der Fahrer ein. Die Vorlastfeder 6 hilft dabei das Ausrücklager 5 von den Tellerfederzungen aus dem Bereich 3 hin zum Bereich 2 weg zu ziehen. Bei der anschließenden Betätigung durch den Fahrer kann der Nehmerzylinder (CSC) nicht überdrückt werden, da die Länge des Bereiches 3 größer als der Kolbenhub beim Auskuppeln ist. Vom Fahrer kann nun beliebig oft aus- und eingekuppelt werden, da die Vorlastfeder das Lager immer wieder zum Bereich 2 zieht.

Auf einen Anschlagring als Transportsicherung gegen ein Rausdrücken des Kolbens 3 aus dem Gehäuse 1 durch die Vorlastfeder 6 kann verzichtet werden, da die Vorlastfeder 6 im Bereich der maximalen Hubposition das Ausrücklager am ausrücken hindert.

Mit der Erfindungsgemäßen Lösung wird mittels der Vorlastfeder der Hubbereich (Ausrückweg) in unbetätigtem Zustand begrenzt.

Darüber hinaus ist in der erfinderischen Lösung durch die umfangsseitig geschlossene Hülse ein Schutz gegen Schmutz integriert, welcher eine Alternative zu einem Faltenbalg darstellt. Figur 4 zeigt das Diagramm des Ausrückweges s über der Federkraft F der Vorlastfeder.

Durch das Umschalten der Wirkrichtung der Vorlastfeder wird somit der Kolbenhub wirkungsvoll begrenzt.

### Bezugszeichenliste

- 1.: Gehäuse
- 1.1: erster Wandbereich
- 1.2: zweiter Wandbereich
- 1.3: Flansch
- 2.: Ringraum
- 3.: Kolben
- 3.1: stirnseitiger Bereich des Kolbens
- 4.: Kolbendichtung
- 5.: Ausrücklager
- 6.: Vorlastfeder
- 6.1: erstes Ende der Vorlastfeder
- 6.2: zweites Ende der Vorlastfeder
- 7.: Nut
- 8.: erste Hülse
- 8.1: radial nach innen weisende Vorsprünge der ersten Hülse 8
- 8.2: radial nach außen weisender Bund der ersten Hülse 8
- 9.: zweite Hülse
- 9.1: radial nach innen weisender Bund der zweiten Hülse
- 9.2: Schlitze
- 9.3: zweites Ende der zweiten Hülse
- 10.: dritte Hülse
- 10.1: radial nach innen weisende Vorsprünge der dritten Hülse 10
- 10.2: radial nach innen weisender Bund der dritten Hülse 10
- 10.3: axialer Bereich der dritten Hülse 10

- A: Längsachse
- s1: erster Ausrückweg
- smax: maximaler Ausrückweg
- F: Federkraft

## Patentansprüche

1. Nehmerzylinder mit einem konzentrisch um eine Getriebeeingangswelle angeordneten Gehäuse (1) welches einen Ringraum (2) aufweist, in dem ein Kolben (3) mit einer Kolbendichtung (4) axial beweglich aufgenommen ist, der mit einem Druck eines Druckmediums beaufschlagbar ist und mit einem Ausrücklager (5) in Wirkverbindung steht, wobei auf den Kolben (3) eine Vorlastfeder (6) wirkt und eine Sicherung zur Begrenzung des Ausrückweges in Richtung zum Ausrücklager (5) vorgesehen ist und wobei in dem Ringraum (2) in Richtung zur Kolbendichtung (4) ein mit dem Druck des Druckmediums beaufschlagbarer Druckraum (D) ausgebildet ist, **dadurch gekennzeichnet, dass** die Sicherung in Form von mit der Vorlastfeder (6) zusammenwirkenden Mitteln ausgebildet ist, durch welche die Wirkrichtung der Vorlastfeder (6) auf den Kolben (3) umkehrbar ist.

2. Nehmerzylinder nach Anspruch 1, **dadurch gekennzeichnet, dass** die Mittel in Form von miteinander wirkverbundenen und axial zueinander und zum Gehäuse verschiebbaren Hülsen ausgebildet sind, die einerseits mit dem Gehäuse (1) und andererseits mit dem Ausrücklager (5) gekoppelt sind und auf welche die Vorlastfeder (6) wirkt derart,
- dass in einer nicht ausgerückten Position des Kolbens (3) bis zu einem ersten Ausrückweg (s1) sich die Vorlastfeder (6) mit ihrem dem Ausrücklager (5) entgegen gerichteten ersten Ende (6.1) am Gehäuse (1) abstützt und mit ihrem ausrücklagerseitigen zweiten Ende (6.2) über die Hülsen auf das Ausrücklager (5) in Richtung zur Kupplung (Ausrückrichtung) wirkt und
- dass ab dem ersten Ausrückweg (s1) bis zu einem maximalen Ausrückweg (smax) sich die Vorlastfeder (6) mit ihrem ausrücklagerseitigen zweiten Ende (6.2) am Gehäuse (1) abstützt und mit ihrem ersten Ende (6.2) über die Hülsen auf das Ausrücklager (5) entgegengesetzt zur Kupplung (Einrückrückrichtung) wirkt.

3. Nehmerzylinder nach Anspruch 1 oder 2, **dadurch gekennzeichnet,**
- **dass** auf dem Außendurchmesser des Gehäuses (1) eine innere erste Hülse (8) axial verschiebbar angeordnet ist, die in eingerückter Position mit einem ersten Ende an einem Flansch (1.3) des Gehäuses (1) anliegt und nach zurücklegen des ersten Ausrückweges (s1) an einem ersten Anschlag des Gehäuses (1) anliegt, und dass die Ausrückfeder (6) mit ihrem zweiten Ende (6.2) an einem in Richtung zum Ausrücklager (5) weisenden zweiten Ende der ersten Hülse (8) anliegt,
- **dass** eine die erste Hülse (8) umringende mittlere zweite Hülse (9) vorhanden ist, an deren vom Ausrücklager (5) abgewendeten ersten Ende das erste Ende (6.1) der Vorlastfeder (6) anliegt und deren zweites Ende (6.2) in Richtung zum Ausrücklager (5) weist,
- **dass** eine die zweite Hülse (9) umringende äußere dritte Hülse (10) vorhanden ist, die axial verschiebbar auf der zweiten Hülse (9) sitzt und an ihrem dem Ausrücklager (5) entgegen weisenden ersten Ende auszugsicher mit der zweiten Hülse (9) gekoppelt ist und mit ihrem in Richtung zum Ausrücklager (5) weisenden zweiten Ende mit dem Ausrücklager (5) verbunden ist.

4. Nehmerzylinder nach einem der Ansprüche 2 bis 3, **dadurch gekennzeichnet, dass** die Hülsen zum Gehäuse (1) und zueinander verdrehsicher angeordnet sind.

5. Nehmerzylinder nach einem der Ansprüche 3 bis 4, **dadurch gekennzeichnet, dass** die erste Hülse (8) auf dem Gehäuse (1) verdrehgesichert ist dadurch, dass die erste Hülse (8) mit radial nach innen weisenden Vorsprüngen (8.1) in Nuten (7) des Gehäuses (1) eingreift, wobei die radial nach innen weisenden Vorsprünge (8.1) bei Ereichen der ersten Auszugslänge (s1) am Anschlag des Gehäuses (1) anliegen,
- wobei der Anschlag des Gehäuses (1) durch das ausrücklagerseitige Ende der Nuten (7) gebildet wird und
- dass die erste Hülse (8) an ihrem zweiten Ende einen radial nach außen weisenden Bund (8.2) aufweist, an dem das zweite Ende (6.2) der Vorlastfeder (6) anliegt.

6. Nehmerzylinder nach einem der Ansprüche 3 bis 5, **dadurch gekennzeichnet, dass** die zweite Hülse (9) an ihrem ersten Ende einen radial nach innen weisenden Bund (9.1) aufweist, an dem das erste Ende (6.1) der Vorlastfeder (6) anliegt und dass die zweite Hülse (9) sich axial erstreckende Schlitze (9.2) aufweist, die nicht bis an das zweite Ende (9.3) der zweiten Hülse (9) reichen.

7. Nehmerzylinder nach einem der Ansprüche 3 bis 6, **dadurch gekennzeichnet, dass** die dritte Hülse (10) an ihrem ersten Ende radial nach innen weisende Vorsprünge (10.1) aufweist, die in die Schlitze (9.2) der zweiten Hülse (9) eingreifen, wobei die in Richtung zum Ausrücklager (5) weisenden Enden der Schlitze (9.2) in Verbindung mit den radial nach innen weisenden Vorsprüngen (10.1) einen Anschlag bilden und dass die dritte Hülse (10) an ihrem zweiten Ende einen sich radial nach innen erstreckenden Bund (10.2) und einen sich anschließenden axialen Bereich (10.3) aufweist, der mit dem Ausrücklager (5) verbunden ist.

8. Nehmerzylinder nach einem der Ansprüche 3 bis 7, **dadurch gekennzeichnet,**
- **dass** in der eingerückten Position alle drei Hülsen (8, 9, 10) ineinander geschoben sind, wobei die zweite Hülse (9) mit ihrem ersten Ende an einem Flansch (1.3) des Gehäuses (1) anliegt und sich die Vorlastfeder (6) darüber am Gehäuse (1) abstützt und das zweite Ende der dritten Hülse (10) am zweiten Ende der ersten Hülse (8) anliegt und die Vorlastfeder (6) mit ihrem zweiten Ende (6.2) auf das zweite Ende der ersten Hülse (8) und damit auf das Ausrücklager (5) in Ausrückrichtung wirkt;
- **dass** bis zum Erreichen eines ersten Ausrückweges (s1) des Kolbens (3) das erste Ende der zweiten Hülse (9) mit dem ersten Ende (6.1) der Vorlastfeder (6) am Gehäuse (1) festgelegt ist und die erste Hülse (8) mit dem Ausrücklager (5) und der dritten Hülse (10) in Ausrückrichtung axial verschoben werden, bis die erste Hülse (8) mit dem radial nach innen weisenden Vorsprüngen (8.1) am Anschlag des Gehäuses (1) anliegt, wobei in dieser Position das zweite Ende (6.2) der Vorlastfeder (6) noch in Ausrückrichtung auf das zweite Ende der ersten Hülse (8) und damit auf das zweite Ende der dritten Hülse (10) und somit auf das Ausrücklager (5) wirkt,
- **dass** ab nach dem zurücklegen des ersten Ausrückweges bis zum Erreichen des maximalen Ausrückweges (smax) des Kolbens (3) das Ausrücklager (5) mit der dritten Hülse (10) in Ausrückrichtung bewegt werden, wobei sich die zweite Hülse (9) mit in Ausrückrichtung bewegt und sich der radial nach innen weisende Bund (9.1) am zweiten Ende der zweiten Hülse (9) entgegen der Federkraft der Ausrückfeder (5) vom Flansche (1.3) des Gehäuses (1) entfernt und das zweite Ende (6.2) der Vorlastfeder (6) am radial nach außen weisenden Bund (8.2) der ersten Hülse (8) anliegt und am Gehäuse (1) festgelegt ist, so dass die Federkraft entgegen der Ausrückrichtung des Kolbens (3) wirkt.

9. Nehmerzylinder nach einem der Ansprüche 3 bis 8, **dadurch gekennzeichnet, dass** die dritte Hülse (10) als Schutz gegen Schmutz umfangsseitig geschlossen ausgeführt ist.

10. Nehmerzylinder nach einem der Ansprüche 3 bis 9, **dadurch gekennzeichnet, dass** die Vorlastfeder (6) in Drehrichtung des Ausrücklagers (5) zu der ersten Hülse (8) verdrehgesichert ist.

## Claims

1. Slave cylinder having a housing (1) which is arranged concentrically about a transmission input shaft and has an annular space (2), in which a piston (3) with a piston seal (4) is received such that it can be moved axially, which piston (3) can be loaded with a pressure of a pressure medium and is operatively connected to a release bearing (5), a preloading spring (6) acting on the piston (3), and a securing means for limiting the release travel in the direction of the release bearing (5) being provided, and a pressure space (D) which can be loaded with the pressure of the pressure medium being configured in the annular space (2) in the direction of the piston seal (4), **characterized in that** the securing means is configured in the form of means which interact with the preloading spring (6) and by way of which the active direction of the preloading spring (6) on the piston (3) can be reversed.

2. Slave cylinder according to Claim 1, **characterized in that** the means are configured in the form of sleeves which are operatively connected to one another and can be displaced axially with respect to one another and with respect to the housing, which sleeves are coupled firstly to the housing (1) and secondly to the release bearing (5), and on which sleeves the preloading spring (6) acts in such a way
- that, in a non-released position of the piston (3) as far as a first release travel (s1), the preloading spring (6) is supported on the housing (1) with its first end (6.1) which is directed counter to the release bearing (5) and acts with its release-bearing-side second end (6.2) via the sleeves on the release bearing (5) in the direction of the clutch (release direction), and
- that, from the first release travel (s1) as far as a maximum release travel (smax), the preloading spring (6) is supported on the housing (1) with its release-bearing-side second end (6.2) and acts with its first end (6.2) via the sleeves on the release bearing (5) in the opposite direction to the clutch (engagement direction).

3. Slave cylinder according to Claim 1 or 2, **characterized**
- **in that** an inner first sleeve (8) is arranged axially displaceably on the external diameter of the housing (1), which inner first sleeve (8), in an engaged position, bears with a first end against a flange (1.3) of the housing (1) and, after covering the first release travel (s1), bears against a first stop of the housing (1), and in that the release spring (6) bears with its second end (6.2) against a second end of the first sleeve (8), which second end points in the direction of the release bearing (5),
- **in that** there is a middle second sleeve (9) which surrounds the first sleeve (8) and against the first end of which, which faces away from the release bearing (5), the first end (6.1) of the preloading spring (6) bears, the second end (6.2) of which preloading spring (6) points in the direction of the release bearing (5), and
- **in that** there is an outer third sleeve (10) which surrounds the second sleeve (9), is seated axially displaceably on the second sleeve (9), is coupled, at its first end which points counter to the release bearing (5), to the second sleeve (9) in a manner which is secured against being pulled out, and is connected to the release bearing (5) by way of its second end which points in the direction of the release bearing (5).

4. Slave cylinder according to either of Claims 2 and 3, **characterized in that** the sleeves are arranged such that they cannot rotate with respect to the housing (1) and with respect to one another.

5. Slave cylinder according to either of Claims 3 and 4, **characterized in that** the first sleeve (8) is secured against rotation on the housing (1) by virtue of the fact that the first sleeve (8) engages with radially inwardly pointing projections (8.1) into grooves (7) of the housing (1), the radially inwardly pointing projections (8.1) bearing against the stop of the housing (1) when the first pull-out length (s1) is reached,
- the stop of the housing (1) being formed by the release-bearing-side end of the grooves (7), and
- **in that** the first sleeve (8) has a radially outwardly pointing collar (8.2) at its second end, against which collar (8.2) the second end (6.2) of the preloading spring (6) bears.

6. Slave cylinder according to one of Claims 3 to 5, **characterized in that** the second sleeve (9) has a radially inwardly pointing collar (9.1) at its first end, against which collar (9.1) the first end (6.1) of the preloading spring (6) bears, and **in that** the second sleeve (9) has axially extending slots (9.2) which do not reach as far as the second end (9.3) of the second sleeve (9).

7. Slave cylinder according to one of Claims 3 to 6, **characterized in that** the third sleeve (10) has radially inwardly pointing projections (10.1) at its first end, which projections (10.1) engage into the slots (9.2) of the second sleeve (9), those ends of the slots (9.2) which point in the direction of the release bearing (5) forming a stop in combination with the radially inwardly pointing projections (10.1), and **in that** the third sleeve (10) has, at its second end, a radially inwardly extending collar (10.2) and an adjoining axial region (10.3) which is connected to the release bearing (5).

8. Slave cylinder according to one of Claims 3 to 7, **characterized**
- **in that**, in the engaged position, all three sleeves (8, 9, 10) are pushed into one another, the second sleeve (9) bearing with its first end against a flange (1.3) of the housing (1), and the preloading spring (6) being supported via this on the housing (1), and the second end of the third sleeve (10) bearing against the second end of the first sleeve (8), and the preloading spring (6) acting with its second end (6.2) in the release direction on the second end of the first sleeve (8) and therefore on the release bearing (5);
- **in that**, until a first release travel (s1) of the piston (3) is reached, the first end of the second sleeve (9) is fixed with the first end (6.1) of the preloading spring (6) on the housing (1), and the first sleeve (8) is displaced axially in the release direction with the release bearing (5) and the third sleeve (10) until the first sleeve (8) bears with the radially inwardly pointing projections (8.1) against the stop of the housing (1), the second end (6.2) of the preloading spring (6) still acting in this position in the release direction on the second end of the first sleeve (8) and therefore on the second end of the third sleeve (10) and thus on the release bearing (5), and
- **in that**, after the first release travel has been covered until the maximum release travel (smax) of the piston (3) is reached, the release bearing (5) is moved in the release direction with the third sleeve (10), the second sleeve (9) also moving in the release direction, and the radially inwardly pointing collar (9.1) at the second end of the second sleeve (9) removing itself from the flange (1.3) of the housing (1) counter to the spring force of the release spring (5), and the second end (6.2) of the preloading spring (6) bearing against the radially outwardly pointing collar (8.2) of the first sleeve (8) and being fixed on the housing (1), with the result that the spring force acts counter to the release direction of the piston (3).

9. Slave cylinder according to one of Claims 3 to 8, **characterized in that** the third sleeve (10) is of closed configuration on the circumferential side as a protective means against dirt.

10. Slave cylinder according to one of Claims 3 to 9, **characterized in that** the preloading spring (6) is secured against rotation in the rotational direction of the release bearing (5) with respect to the first sleeve (8).

## Revendications

1. Cylindre récepteur avec un carter (1) disposé concentriquement autour d'un arbre d'entrée de boîte de vitesses, ledit carter comportant une chambre annulaire (2) dans laquelle un piston (3) doté d'un joint de piston (4) est logé de façon à pouvoir se déplacer dans le plan axial, ledit piston pouvant être alimenté avec une pression d'un agent de mise sous pression et étant en liaison active avec une butée de débrayage (5), un ressort de précharge (6) agissant sur le piston (3) et une protection de délimitation de la course de débrayage étant prévue en direction de la butée de débrayage (5) et une chambre de pression (D) pouvant être alimentée avec la pression de l'agent de mise sous pression étant réalisée dans la chambre annulaire (2) en direction du joint de piston (4), **caractérisé en ce que** la protection est réalisée sous la forme de moyens interagissant avec le ressort de précharge (6), la direction d'action du ressort de précharge (6) sur le piston (3) pouvant être inversée par le biais desdits moyens.

2. Cylindre récepteur selon la revendication 1, **caractérisé en ce que** les moyens sont réalisés sous la forme de douilles activement reliées les unes aux autres et pouvant être coulissées dans le plan axial les unes par rapport aux autres et par rapport au carter, lesdites douilles étant couplées d'une part au carter (1) et d'autre part à la butée de débrayage (5) et le ressort de précharge (6) agissant de telle sorte sur elles que :
- dans une position non débrayée du piston (3) jusqu'à une première course de débrayage (s1), le ressort de précharge (6) appuie contre le carter (1) avec sa première extrémité (6.1) orientée à l'encontre de la butée de débrayage (5) et agit avec sa deuxième extrémité (6.2) située du côté de la butée de débrayage, via les douilles, sur la butée de débrayage (5) en direction du couplage (direction de débrayage) ; et
- de la première course de débrayage (s1) jusqu'à une course de débrayage maximale (smax), le ressort de précharge (6) appuie contre le carter (1) avec sa deuxième extrémité (6.2) située du côté de la butée de débrayage et avec sa première extrémité (6.2), via les douilles, sur la butée de débrayage (5) de façon opposée au couplage (direction d'embrayage).

3. Cylindre récepteur selon la revendication 1 ou 2, **caractérisé en ce que** :
- sur le diamètre extérieur du carter (1), une première douille (8) intérieure est disposée de façon à pouvoir coulisser dans le plan axial, ladite douille reposant avec une première extrémité, dans la position embrayée, contre un flasque (1.3) du carter (1) et reposant, après parcours de la première course de débrayage (s1), contre une première butée du carter (1) et que le ressort de débrayage (6) repose avec sa deuxième extrémité (6.2) contre une deuxième extrémité de la première douille (8) orientée en direction de la butée de débrayage (5) ;
- qu'une deuxième douille (9) centrale encerclant la première douille (8) est présente, la première extrémité (6.1) du ressort de précharge (6) reposant contre sa première extrémité s'écartant de la butée de débrayage (5) et étant orientée en direction de sa deuxième extrémité (6.2) en direction de la butée de débrayage (5) ;
- une troisième douille (10) extérieure encerclant la deuxième douille (9) est présente, celle-ci reposant de façon à pouvoir coulisser dans le plan axial sur la deuxième douille (9) et étant couplée, au niveau de sa première extrémité orientée à l'encontre de la butée de débrayage (5) à la deuxième douille (9), de façon sécurisée contre la sortie, et étant reliée, avec sa deuxième extrémité orientée en direction de la butée de débrayage (5), à la butée de débrayage (5).

4. Cylindre récepteur selon l'une quelconque des revendications 2 à 3, **caractérisé en ce que** les douilles sont disposées de façon sécurisée contre la rotation par rapport au carter (1) et les unes par rapport aux autres.

5. Cylindre récepteur selon l'une quelconque des revendications 3 à 4, **caractérisé en ce que** :
- la première douille (8) est fixée de façon sécurisée contre la rotation sur le carter (1) **en ce que** la première douille (8) s'imbrique dans les rainures (7) du carter (1) avec des saillies (8.1) orientées vers l'intérieur dans le plan radial, les saillies (8.1) orientées vers l'intérieur dans le plan radial reposant contre la butée du carter (1) une fois la première longueur de sortie (s1) atteinte ;
- la butée du carter (1) étant formée par l'extrémité des rainures (7) située du côté de la butée de débrayage ;
- que la première douille (8) comporte au niveau de sa deuxième extrémité une ceinture (8.2) orientée vers l'extérieur dans le plan radial contre laquelle la deuxième extrémité (6.2) du ressort de précharge (6) repose.

6. Cylindre récepteur selon l'une quelconque des revendications 3 à 5, **caractérisé en ce que** la deuxième douille (9) comporte au niveau de sa première extrémité une ceinture (9.1) orientée vers l'intérieur dans le plan radial contre laquelle la première extrémité (6.1) du ressort de précharge (6) repose et que la deuxième douille (9) comporte des fentes (9.2) s'étendant dans le plan axial n'allant pas jusqu'à la deuxième extrémité (9.3) de la deuxième douille (9).

7. Cylindre récepteur selon l'une quelconque des revendications 3 à 6, **caractérisé en ce que** la troisième douille (10) comporte au niveau de sa première extrémité des saillies (10.1) orientées vers l'intérieur dans le plan radial s'imbriquant dans les fentes (9.2) de la deuxième douille (9), les extrémités, orientées en direction de la butée de débrayage (5), des fentes (9.2) formant une butée en relation avec les saillies (10.1) orientées vers l'intérieur dans le plan radial et que la troisième douille (10) comporte au niveau de sa deuxième extrémité une ceinture (10.2) s'étendant vers l'intérieur dans le plan radial et une zone (10.3) axiale connexe reliée à la butée de débrayage (5).

8. Cylindre récepteur selon l'une quelconque des revendications 3 à 7, **caractérisé en ce que** :
- dans la position embrayée, les trois douilles (8, 9, 10) sont poussées les unes dans les autres, la deuxième douille (9) reposant avec sa première extrémité contre un flasque (1.3) du carter (1) et le ressort de précharge (6) appuyant par ce biais contre le carter (1) et la deuxième extrémité de la troisième douille (10) reposant contre la deuxième extrémité de la première douille (8) et le ressort de précharge (6) agissant avec sa deuxième extrémité (6.2) sur la deuxième extrémité de la première douille (8) et agissant ainsi sur la butée de débrayage (5) dans la direction de débrayage ;
- jusqu'à ce qu'une première course de débrayage (s1) du piston (3) soit atteinte, la première extrémité de la deuxième douille (9) est fixée au carter (1) avec la première extrémité (6.1) du ressort de précharge (6) et que la première douille (8) est poussée dans le plan axial dans la direction de débrayage avec la butée de débrayage (5) et la troisième douille (10) jusqu'à ce que la première douille (8) repose contre la butée du carter (1) avec les saillies (8.1) orientées vers l'intérieur dans le plan radial, la deuxième extrémité (6.2) du ressort de précharge (6) agissant encore dans cette position, dans la direction de débrayage, sur la deuxième extrémité de la première douille (8) et ainsi sur la deuxième extrémité de la troisième douille (10) et ainsi sur la butée de débrayage (5) ;
- après le parcours de la première course de débrayage jusqu'à ce que la course de débrayage maximale (smax) du piston (3) soit atteinte, la butée de débrayage (5) étant déplacée avec la troisième douille (10) dans la direction de débrayage, la deuxième douille (9) étant déplacée conjointement dans la direction de débrayage et la ceinture (9.1) orientée vers l'intérieur dans le plan radial appuyant contre la deuxième extrémité de la deuxième douille (9) à l'encontre de la force de ressort du ressort de débrayage (5) de façon à s'éloigner des flasques (1.3) du carter (1) et la deuxième extrémité (6.2) du ressort de précharge (6) butant contre la ceinture (8.2), orientée vers l'extérieur dans le plan radial, de la première douille (8) et étant fixée au carter (1), de sorte que la force de ressort agit à l'encontre de la direction de débrayage du piston (3).

9. Cylindre récepteur selon l'une quelconque des revendications 3 à 8, **caractérisé en ce que** la troisième douille (10) est réalisée sous la forme d'une protection contre l'encrassement du côté de la périphérie.

10. Cylindre récepteur selon l'une quelconque des revendications 3 à 9, **caractérisé en ce que** le ressort de précharge (6) est sécurisé contre la torsion par rapport à la première douille (8), dans la direction de rotation de la butée de débrayage (5).
